(19) Europäisches Patentamt
European Patent Office
Office européen des brevets

(11) **EP 4 783 680 A1**

(12) **EUROPEAN PATENT APPLICATION**
published in accordance with Art. 153(4) EPC

(43) Date of publication:
**29.07.2026 Bulletin 2026/31**

(21) Application number: **24876350.0**

(22) Date of filing: **14.09.2024**

(51) International Patent Classification (IPC):
*H04W 52/02* (2009.01)

(52) Cooperative Patent Classification (CPC):
**H04W 24/02; H04W 52/02;** Y02D 30/70

(86) International application number:
**PCT/CN2024/119113**

(87) International publication number:
**WO 2025/077530 (17.04.2025 Gazette 2025/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.10.2023 CN 202311333696**

(71) Applicant: HUAWEI TECHNOLOGIES CO., LTD.
**Shenzhen 518129 (CN)**

(72) Inventors:
• LI, Xiaowen
  **Shenzhen, Guangdong 518129 (CN)**
• GENG, Xinli
  **Shenzhen, Guangdong 518129 (CN)**
• ZHAO, Nan
  **Shenzhen, Guangdong 518129 (CN)**
• YANG, Zhengjie
  **Shenzhen, Guangdong 518129 (CN)**

(74) Representative: **Körber, Martin Hans**
**Mitscherlich PartmbB**
**Karlstraße 7**
**80333 München (DE)**

(54) **COMMUNICATION METHOD AND COMMUNICATION APPARATUS**

(57) This application provides a communication method and a communication apparatus. The communication method includes: A computing server divides a plurality of base stations in an optimization region into a plurality of base station clusters, and determines a type of a first base station cluster based on a relationship between a first indicator of the first base station cluster in the plurality of base station clusters and the first indicator of the plurality of base station clusters. The computing server determines a first energy saving policy for the first base station cluster based on the type of the first base station cluster. According to the communication method in embodiments of this application, different energy saving policies may be determined for different types of base station clusters in the optimization region, to improve a network energy saving effect.

Step S210: A computing server determines a plurality of base station clusters in a first region, where the plurality of base station clusters include a first base station cluster

Step S212: The computing server determines a type of the first base station cluster based on a relationship between a first indicator of the first base station cluster and the first indicator of the plurality of base station clusters

Step S214: The computing server determines a first energy saving policy for the first base station cluster based on the type of the first base station cluster

FIG. 2

EP 4 783 680 A1

## Description

This application claims priority to Chinese Patent Application No. 202311333696.5, filed with the China National Intellectual Property Administration on October 13, 2023 and entitled "COMMUNICATION METHOD AND COMMUNICATION APPARATUS", which is incorporated herein by reference in its entirety.

## TECHNICAL FIELD

This application relates to the field of communication technologies, and more specifically, this application relates to a communication method and a communication apparatus.

## BACKGROUND

In a case of global warming and large-scale deployment of 5G base stations, network energy efficiency optimization becomes a new concern. Currently, a frequently-used method for reducing network power consumption is selecting several fixed time periods (usually, selecting a time period in which a network service volume is small and a quantity of users is small, for example, 0:00 a.m. to 6:00 a.m.), and setting the time period as sleep time of a base station. The current method for reducing the network power consumption requires that an overall key performance indicator (key performance indicator, KPI) of a network not deteriorate. Consequently, a network energy saving effect is limited.

## SUMMARY

This application provides a communication method and a communication apparatus, to improve a network energy saving effect.

According to a first aspect, a communication method is provided. The method may be performed by a computing server, or may be performed by a module (for example, a chip or a circuit) in the computing server, or may be performed by a logical node, a logical module, or software that can implement all or some functions of the computing server. This is not limited in this application.

The method includes: The computing server determines a plurality of base station clusters in a first region, where the plurality of base station clusters include a first base station cluster. The computing server determines a type of the first base station cluster based on a relationship between a first indicator of the first base station cluster and the first indicator of the plurality of base station clusters. The computing server determines a first energy saving policy for the first base station cluster based on the type of the first base station cluster.

Specifically, the first region may be an optimization region.

Specifically, the first indicator may include at least one of the following: an average rate, a low-rate proportion, a coverage rate, or the like.

According to the foregoing method, the computing server may determine different energy saving policies for different types of base station clusters in the optimization region, so that different levels of loss can be caused to different types of base station clusters based on an actual user requirement, to improve a network energy saving effect.

With reference to the first aspect, in some implementations of the first aspect, that the computing server determines the type of the first base station cluster based on the relationship between the first indicator of the first base station cluster and the first indicator of the plurality of base station clusters includes: The computing server determines, based on the relationship between the first indicator of the first base station cluster and the first indicator of the plurality of base station clusters, a first loss value corresponding to the first indicator of the first base station cluster. The computing server determines the type of the first base station cluster based on the first loss value, where the type of the first base station cluster corresponds to a first loss range, and the first loss value is within the first loss range.

Specifically, different loss ranges corresponding to types of different base station clusters may be predefined.

According to the foregoing method, the computing server may calculate a loss value of the first base station cluster based on a user requirement of the first base station cluster, and determine the type of the first base station cluster based on the loss value, to determine an energy saving policy for the first base station cluster.

With reference to the first aspect, in some implementations of the first aspect, that the computing server determines the type of the first base station cluster based on the first loss value includes: The computing server obtains first information, where the first information includes the different loss ranges corresponding to the types of the different base station clusters. The computing server determines the type of the first base station cluster based on the first loss value and the first information.

For example, the computing server may obtain the first information from an operation and maintenance center OMC.

According to the foregoing method, the computing server may obtain a user configuration, and determine, with reference to the user configuration, the different loss ranges corresponding to the types of the different base station clusters, and the type of the first base station cluster.

With reference to the first aspect, in some implementations of the first aspect, that the computing server determines the first energy saving policy for the first base station cluster based on the type of the first base station cluster includes: The computing server determines a second energy saving policy based on the type of the first base station cluster, where the second energy saving policy corresponds to the first loss range. The computing server determines a second loss value according to the second energy saving policy. The computing server determines whether the second loss value is less than an upper limit of the first loss range. If the second loss value is less than the upper limit of the first loss range, the computing server determines the second energy saving policy as the first energy saving policy for the first base station cluster.

If the second loss value is not less than the upper limit of the first loss range, the computing server determines a third energy saving policy, where the third energy saving policy corresponds to a second loss range, and the second loss range is smaller than the first loss range. The computing server determines a third loss value according to the third energy saving policy. The computing server determines whether the third loss value is less than the upper limit of the first loss range. If the third loss value is less than the upper limit of the first loss range, the computing server determines the third energy saving policy as the first energy saving policy for the first base station cluster.

If the third loss value is not less than the upper limit of the first loss range, the computing server determines a fourth energy saving policy, where the fourth energy saving policy corresponds to a third loss range, and the third loss range is smaller than the second loss range. The computing server determines a fourth loss value according to the fourth energy saving policy. The computing server determines whether the fourth loss value is less than the upper limit of the first loss range. If the fourth loss value is less than the upper limit of the first loss range, the computing server determines the fourth energy saving policy as the first energy saving policy for the first base station cluster.

It can be learned that the foregoing process in which the computing server determines the first energy saving policy for the first base station cluster is an iteration process.

According to the foregoing method, the computing server may determine, for the first base station cluster, an appropriate energy saving policy within a loss range corresponding to the type of the first base station cluster, thereby maximizing energy saving gains.

With reference to the first aspect, in some implementations of the first aspect, the method further includes: The computing server sends the first energy saving policy to the operation and maintenance center OMC.

According to the foregoing method, the computing server may send the determined first energy saving policy to the OMC, the OMC delivers the first energy saving policy to each base station in the first base station cluster, and each base station performs the first energy saving policy.

According to a second aspect, a communication apparatus is provided. The apparatus includes a processing unit, configured to determine a plurality of base station clusters in a first region, where the plurality of base station clusters include a first base station cluster. The processing unit is further configured to determine a type of the first base station cluster based on a relationship between a first indicator of the first base station cluster and the first indicator of the plurality of base station clusters, and the processing unit is further configured to determine a first energy saving policy for the first base station cluster based on the type of the first base station cluster.

With reference to the second aspect, in some implementations of the second aspect, that the processing unit is configured to determine the type of the first base station cluster based on the relationship between the first indicator of the first base station cluster and the first indicators of the plurality of base station clusters includes: The processing unit is further configured to determine, based on the relationship between the first indicator of the first base station cluster and the first indicator of the plurality of base station clusters, a first loss value corresponding to the first indicator of the first base station cluster. The processing unit is further configured to determine the type of the first base station cluster based on the first loss value, where the type of the first base station cluster corresponds to a first loss range, and the first loss value is within the first loss range.

With reference to the second aspect, in some implementations of the second aspect, that the processing unit is configured to determine the type of the first base station cluster based on the first loss value includes: The apparatus further includes: a transceiver unit, configured to obtain first information, where the first information includes different loss ranges corresponding to types of different base station clusters. The processing unit is further configured to determine the type of the first base station cluster based on the first loss value and the first information.

With reference to the second aspect, in some implementations of the second aspect, that the processing unit is configured to determine the first energy saving policy for the first base station cluster based on the type of the first base station cluster includes: The processing unit is configured to determine the first loss range based on the type of the first base station cluster. The processing unit is configured to determine whether a second loss value is less than an upper limit of the first loss range, where the second loss value is a loss value generated according to a second energy saving policy, and the second energy saving policy is an energy saving policy corresponding to the type of the first base station cluster. If the second loss value is less than the upper limit of the first loss range, the processing unit is configured to determine the first energy saving policy for the first base station cluster as the second energy saving policy.

If the second loss value is not less than the upper limit of the first loss range, the processing unit is configured to determine whether a third loss value is less than the upper limit of the first loss range, where the third loss value is a loss value generated according to a third energy saving policy, the third energy saving policy is an energy saving policy corresponding to a type of a second base station cluster, the type of the second base station cluster corresponds to a second loss range, and the second loss range is smaller than the first loss range. If the third loss value is less than the upper limit of the first loss range, the processing unit is configured to determine the first energy saving policy for the first base station cluster as the third energy saving policy.

If the third loss value is not less than the upper limit of the first loss range, the processing unit is configured to determine whether a fourth loss value is less than the upper limit of the first loss range, where the fourth loss value is a loss value generated according to a fourth energy saving policy, the fourth energy saving policy is an energy saving policy corresponding to a type of a third base station cluster, the type of the third base station cluster corresponds to a third loss range, and the third loss range is smaller than the second loss range. If the fourth loss value is less than the upper limit of the first loss range, the processing unit is configured to determine the first energy saving policy for the first base station cluster as the fourth energy saving policy.

With reference to the second aspect, in some implementations of the second aspect, the transceiver unit is further configured to send the first energy saving policy to an operation and maintenance center OMC.

For explanations and beneficial effects of content related to the communication apparatus provided in the second aspect, refer to the communication method according to the first aspect. Details are not described herein again.

According to a third aspect, a communication apparatus is provided, and includes a processor. The processor is configured to execute a computer program or instructions or use a logic circuit, to enable the communication apparatus to perform the method according to any one of the first aspect and the possible implementations of the first aspect.

In a possible implementation, the communication apparatus further includes a memory, where the memory is configured to store the computer program or the instructions.

In a possible implementation, the communication apparatus further includes a communication interface, where the communication interface is configured to: input and/or output a signal.

According to a fourth aspect, a communication apparatus is provided, and includes a logic circuit and an input/output interface. The input/output interface is configured to input and/or output a signal, and the logic circuit is configured to perform the method according to any one of the first aspect and the possible implementations of the first aspect.

According to a fifth aspect, a computer-readable storage medium is provided. The computer-readable storage medium stores a computer program or instructions, and when the computer program or the instructions are run on a computer, the method according to any one of the first aspect and the possible implementations of the first aspect is performed.

According to a sixth aspect, a computer program product is provided, and includes instructions. When the instructions are run on a computer, the method according to any one of the first aspect and the possible implementations of the first aspect is performed.

According to a seventh aspect, a communication system is provided, where the communication system includes the computing server and the OMC, and the computing server is configured to perform the method according to any one of the first aspect and the possible implementations of the first aspect.

For descriptions of beneficial effects of the third aspect to the seventh aspect, refer to descriptions of the first aspect.

## BRIEF DESCRIPTION OF DRAWINGS

FIG. 1 is a diagram of an example of a communication system 100 applicable to an embodiment of this application;
FIG. 2 is a schematic flowchart of a communication method 200 according to an embodiment of this application;
FIG. 3 is a schematic flowchart of determining an energy saving policy according to an embodiment of this application;
FIG. 4 is a block diagram of an example of a communication apparatus 400 applicable to an embodiment of this application;
FIG. 5 is a block diagram of an example of a communication apparatus 500 applicable to an embodiment of this application; and
FIG. 6 is a block diagram of an example of a communication apparatus 600 applicable to an embodiment of this application.

**DESCRIPTION OF EMBODIMENTS**

A communication system applicable to embodiments of this application is first described.

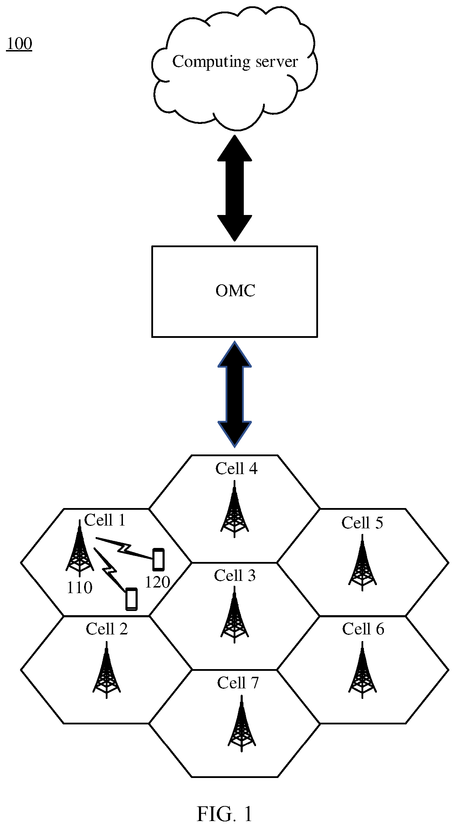

FIG. 1 is a diagram of a communication system 100 applicable to an embodiment of this application. As shown in FIG. 1, the communication system 100 includes a computing server, an operation and maintenance center (operation and maintenance center, OMC), a network device 110, and a terminal device 120.

In an application process of the communication system 100, the computing server may request the OMC to input measurement data. After receiving the measurement input request from the computing server, the OMC controls the network device 110 to start collecting data. The network device 110 performs measurement control on the measurement data, and controls the terminal device 120 to report the measurement data in real time.

FIG. 1 is a diagram of an example of a communication system 100 applicable to an embodiment of this application. The communication system 100 includes a plurality of network devices 110. Each of the plurality of network devices 110 is located in one cell. For example, the plurality of network devices 110 are respectively located in a cell 1 (cell 1), a cell 2, a cell 3, a cell 4, a cell 5, a cell 6, and a cell 7 shown in FIG. 1. It should be understood that each network device 110 may serve a plurality of cells. For example, the cell 1 and the cell 4 may share one network device 110. This is not limited in this embodiment of this application.

In addition, each cell may include a plurality of terminal devices 120. This is not limited in this embodiment of this application.

In addition, the plurality of network devices 110 in FIG. 1 may form one or more base station clusters based on different scenarios, actual user requirements, and the like. A plurality of base stations (or a plurality of network devices) in each base station cluster may meet different service performance requirements. For example, a region like a street garden corresponds to a base station cluster with a high network rate, a region like a school corresponds to a base station cluster with a medium network rate, and a region like a shopping mall corresponds to a base station cluster with a low network rate. This is not limited in this application.

Specifically, division into base station clusters may be performed on a plurality of base stations in one region. For descriptions of the region, refer to the following descriptions of a first region. A size, a location, and the like of the region are not limited in this application.

The terminal device 120 in the communication system 100 may be a device having a wireless transceiver function, and may be user equipment (user equipment, UE), a user, an access terminal, a subscriber unit (subscriber unit), a subscriber station, a mobile station (mobile station), a remote station, a remote terminal, a mobile device, a user terminal, a wireless communication device, a user agent, or a user apparatus. The terminal device 120 may alternatively be a satellite phone, a cellular phone, a smartphone, a wireless data card, a wireless modem, or a machine-type communication device, or may be a cordless phone, a session initiation protocol (session initiation protocol, SIP) phone, a wireless local loop (wireless local loop, WLL) station, personal digital assistant (personal digital assistant, PDA), a customer-premises equipment (customer-premises equipment, CPE), a smart point of sale (point of sale, POS) machine, a handheld device having a wireless communication function, a computing device or another processing device connected to the wireless modem, a vehicle-mounted device, a communication device carried on a high altitude aircraft, a wearable device, an uncrewed aerial vehicle, a robot, a terminal in device-to-device (device-to-device, D2D) communication, a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a communication network evolved after 5G, or the like. This is not limited in this application.

A communication apparatus configured to implement a function of the terminal device 120 may be a terminal device, or may be an apparatus, for example, a chip system, that can support the terminal device in implementing the function. The apparatus may be installed in the terminal device or used in cooperation with the terminal device. In this application, the chip system may include a chip, or may include a chip and another discrete device.

The network device 110 in the communication system 100 is a device having a wireless transceiver function, and is configured to communicate with the terminal device 120. The network device 110 may be a node in a radio access network (radio access network, RAN), and may be referred to as a base station, or may be referred to as a RAN node. The network device 110 may be an evolved NodeB (evolved NodeB, eNB, or eNodeB) in long term evolution (long term evolution, LTE), a base station in a 5G network, for example, a gNodeB (gNB), or a base station in a public land mobile network (public land mobile network, PLMN) evolved after 5G, a broadband network gateway (broadband network gateway, BNG), an aggregation switch, a 3rd generation partnership project (3rd generation partnership project, 3GPP) access device, or the like.

The RAN may be configured as a RAN defined in a 3GPP protocol, an open radio access network (open radio access network, O-RAN), or a cloud access network (cloud radio access network, C-RAN). The network device 110 may further include various forms of base stations, for example, a macro base station, a micro base station (also referred to as a small cell), a relay station, a transmission reception point (transmission reception point, TRP), a transmitting point (transmitting point, TP), a mobile switching center, a device functioning as a base station in device-to-device (device-to-device, D2D) communication, vehicle-to-everything (vehicle-to-everything, V2X) communication, and machine-to-machine (machine-to-machine, M2M) communication, a network device in a non-terrestrial network (non-terrestrial network, NTN), or the like. This is not specifically limited.

The network device 110 may further include a network element or a module that implements some functions of a base station, for example, including one or more of the following: a central unit (central unit, CU), a distributed unit (distributed unit, DU), or a radio unit (radio unit, RU). Optionally, the CU may be further divided into a CU-control plane (control plane, CP) and a CU-user plane (user plane, UP). Functions of the CU and the DU may be implemented by different network elements, or may be both implemented by a baseband unit (baseband unit, BBU) of the base station. A function of the RU may be implemented by a radio frequency device of the base station. For example, the radio frequency device of the base station may be a remote radio unit (remote radio unit, RRU), a pico remote radio unit (pico remote radio unit, pRRU), an active antenna unit (active antenna unit, AAU), another unit, module, or device having a radio frequency processing function, or the like. A communication interface protocol between the BBU and the radio frequency device may be a common public radio interface (common public radio interface, CPRI) protocol, an enhanced common public radio interface (enhanced common public radio interface, eCPRI) protocol, a fronthaul interface protocol between a DU and an RU in an O-RAN system, or the like. This is not limited.

A communication apparatus configured to implement a function of the network device 110 may be a network device, or may be an apparatus, for example, a chip system, that can support the network device in implementing the function. The apparatus may be installed in the network device or used in cooperation with the network device. The chip system in embodiments of this application may include a chip, or may include a chip and another discrete device.

The OMC in the communication system 100 may be a network management platform, for example, a U2000 platform.

The computing server in the communication system 100 may be an online tool platform, for example, a power star cloud platform.

In this embodiment of this application, the communication system 100 may be an NTN system, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5G system, a 6G system, an inter-satellite communication system, and a satellite communication system. The satellite communication system includes a satellite base station and a terminal device. The satellite base station provides a communication service for the terminal device. The satellite base station may also communicate with a ground base station. A satellite may be used as a base station or a terminal device. The satellite may be a non-ground base station, a non-ground device, or the like, for example, an uncrewed aerial vehicle, a hot air balloon, a low-orbit satellite, a medium-orbit satellite, or a high-orbit satellite.

Alternatively, the communication system 100 may be a ground cellular communication system, a high-altitude communication platform (high altitude platform station, HAPS) communication system, a V2X system, an integrated access and backhaul (integrated access and backhaul, IAB) system, a reconfigurable intelligent surface (reconfigurable intelligent surface, RIS) communication system, or the like. This is not limited.

In a case of global warming and large-scale deployment of 5G base stations, network energy efficiency optimization becomes a new concern. Currently, a frequently-used method for reducing network power consumption is selecting several fixed time periods (usually, selecting a time period in which a network service volume is small and a quantity of users is small, for example, 0:00 a.m. to 6:00 a.m.), and setting the time period as sleep time of a base station. The current method for reducing the network power consumption requires that an overall key performance indicator (key performance indicator, KPI) of a network not deteriorate. Consequently, a network energy saving effect is limited.

Based on this, this application provides a communication method 200, to cause different degrees of loss to KPIs of different network devices based on an actual user requirement, so as to improve energy saving gains.

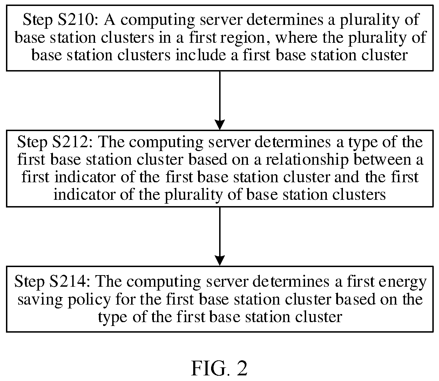

FIG. 2 is a schematic flowchart of the communication method 200 according to an embodiment of this application. It should be noted that in FIG. 2, an example in which a base station is used as the network device 110 and a user is used as the terminal device 120 is used for description. This is not limited in this application. Specifically, the communication method 200 includes the following steps.

Step S210: A computing server determines a plurality of base station clusters in a first region.

Specifically, the first region may be any region. This is not limited in this application. For example, the first region may be a region including a plurality of cells, or the first region may be a region covered by a plurality of base stations, or the first region may be an optimization region in which energy-saving optimization needs to be performed on a base station.

For example, the computing server may determine the plurality of base station clusters in the first region by using the following method:

The computing server obtains a plurality of measurement reports (measurement reports, MRs) of a plurality of users served by each base station in the first region and engineering parameter data of each base station in the first region. The computing server may determine N first coverage rates of each base station in the first region based on the obtained MRs. The computing server constructs a cluster feature table of each base station based on the N first coverage rates of each base station, the engineering parameter data of each base station, and the like. The computing server divides base stations in the first region based on the cluster feature table of each base station in the first region, to form the plurality of base station clusters.

Specifically, the computing server may determine each base station based on the engineering parameter data of each base station, and determine the first coverage rate of each base station based on the obtained MRs of the first region.

Specifically, an MR of each user includes at least one of the following information: a primary cell identifier of the user, reference signal received power (reference signal received power, RSRP) between the user and a primary cell, a neighboring cell identifier of the user, RSRP between the user and a neighboring cell, an identifier of each broadcast beam between the user and the primary cell and the neighboring cell, RSRP of each broadcast beam, and the like.

Specifically, the engineering parameter data of each base station includes at least one of the following information: a name of the base station, a longitude of the base station, a latitude of the base station, and the like.

Specifically, the N first coverage rates of each base station are first coverage rates of the base station relative to N base stations in the first region. For example, a first coverage rate of a base station #1 relative to a base station #2 in the first region is obtained as follows: A plurality of users served by the base station #1 report a plurality of MRs to the base station #1, information about at least one neighboring cell managed by the base station #2 is detected in a part of MRs #1 of the plurality of MRs, and the first coverage rate of the base station #1 relative to the base station #2 is a proportion of a quantity of the part of MRs #1 in a quantity of the plurality of MRs received by the base station #1. Similarly, for a first coverage rate of the base station #1 relative to another base station in the first region, refer to the first coverage rate of the base station #1 relative to the base station #2 in the first region. Details are not described herein again.

For example, the cluster feature table that is of each base station in the first region and that is constructed by the computing server is shown in the following Table 1.

Table 1

| Feature 1 | Feature 2 | Feature 3 | Feature 4 | Feature 5 | ... | Feature N+3 |
|---|---|---|---|---|---|---|
| Name of the base station #1 | Longitude of the base station #1 | Latitude of the base station #1 | First coverage rate relative to a 1st base station | First coverage rate relative to a 2nd base station | ... | First coverage rate relative to an Nth base station |
| Name of the base station #2 | Longitude of the base station #2 | Latitude of the base station #2 | First coverage rate relative to the 1st base station | First coverage rate relative to the 2nd base station | ... | First coverage rate relative to the Nth base station |
| ... | ... | ... | ... | ... | ... | ... |
| Name of a base station #N | Longitude of the base station #N | Latitude of the base station #N | First coverage rate relative to the 1st base station | First coverage rate relative to the 2nd base station | ... | First coverage rate relative to the Nth base station |

The computing server may perform clustering on the N base stations in the first region based on the cluster feature table in the foregoing Table 1 by using a K-means algorithm, to form a plurality of base station clusters.

In addition, the computing server may further determine at least one first base station that can be turned off in the first region. A method for determining, by the computing server, the at least one first base station that can be turned off in the first region is as follows:

The computing server may determine each base station based on the engineering parameter data of each base station, and determine a second coverage rate of each base station based on the obtained MRs of the first region. The computing server determines, based on the second coverage rate of each base station in the first region, the at least one first base station that can be turned off.

Specifically, the second coverage rate of each base station is a second coverage rate of the base station relative to another base station in the first region. For example, a second coverage rate of the base station #1 relative to another base station in the first region is obtained as follows: The plurality of users served by the base station #1 report the plurality of MRs to the base station #1, information about at least one neighboring cell managed by the another base station is detected in a part of MRs #2 of the plurality of MRs, and the second coverage rate of the base station #1 is a proportion of a quantity of the part of MRs #2 in a quantity of the plurality of MRs received by the base station #1. Similarly, for a second coverage rate of the base station #2, refer to the second coverage rate of the base station #1. Details are not described herein again.

Specifically, the computing server may determine whether the second coverage rate of each base station is greater than a first threshold. If the second coverage rate of each base station is greater than the first threshold, it is determined that the base station is a base station that can be turned off. For example, the first threshold may be 80%, or may be another value. This is not limited in this application.

Step S212: The computing server determines a type of a first base station cluster based on a relationship between a first indicator of the first base station cluster and the first indicator of the plurality of base station clusters, where the first base station cluster belongs to the plurality of base station clusters.

Specifically, the first indicator may be an average rate, a low-rate proportion, or a coverage rate. The average rate is an average rate of signal transmission in a base station cluster. The low-rate proportion is a proportion, in a total quantity of base stations in a base station cluster, of a quantity of base stations whose signal transmission rates are lower than a second threshold in the base station cluster. The second threshold may be preset. This is not limited in this application. The coverage rate is a coverage rate of a base station cluster relative to another base station cluster in the first region. For example, a coverage rate of a base station cluster #1 relative to another base station cluster in the first region is obtained as follows: A plurality of users served by the base station cluster #1 report a plurality of MRs to the base station cluster #1, information about at least one neighboring cell managed by the another base station cluster is detected in a part of MRs #3 of the plurality of MRs, and the coverage rate of the base station cluster #1 is a proportion of a quantity of the part of MRs #3 in a quantity of the plurality of MRs received by the base station cluster #1. Similarly, for a coverage rate of a base station cluster #2, refer to the coverage rate of the base station cluster #1. Details are not described herein again.

It should be noted that the first base station cluster may be any base station cluster in the plurality of base station clusters. This is not limited in this application.

Specifically, the computing server may use the following method to determine the type of the first base station cluster based on the relationship between the first indicator of the first base station cluster and the first indicator of the plurality of base station clusters:

The computing server determines, based on a relationship between the first indicator of the first base station cluster and the plurality of base station clusters, a first loss value corresponding to the first indicator of the first base station cluster. The computing server determines the type of the first base station cluster based on the first loss value, where the type of the first base station cluster corresponds to a first loss range, and the first loss value is within the first loss range.

The following uses an example in which the first indicator is the average rate for description. For example, an OMC collects rates of each base station in the first region in one day (24 hours), where the rate is defined as $SiteRate_{i,t}$ and represents a rate of a base station i in the first region at time t, and the OMC reports the collected data to the computing server. Therefore, the computing server may determine a cluster-level whole-day average rate (ClusterRate) and an average rate of the first region (RegionRate) of the first base station cluster as follows:

$$\text{ClusterRate} = \frac{\sum_t^T \sum_i^N SiteRate_{i,t}}{T * N}$$

$$\text{RegionRate} = \frac{\sum_t^T \sum_i^M SiteRate_{i,t}}{T * M}$$

N is a quantity of base stations in the first base station cluster, M is a quantity of base stations in the first region, and T is 24.

Therefore, a relationship between an average rate of the first base station cluster and an average rate of the plurality of base station clusters may be determined as follows:

$$\text{x} = \frac{\text{ClusterRate}}{\text{RegionRate}}$$

Then, based on the relationship between the average rate of the first base station cluster and the average rate of the plurality of base station clusters, the first loss value corresponding to the average rate of the first base station cluster may be determined as follows:

$$\text{First loss value} = \begin{cases} N1, x \le 0.7 \\ \min\left(\left((x - 0.7) * 0.2, N4\right)\right), x > 0.7 \end{cases}$$

For example, a base station cluster may be defined as the following four types, and the computing server may determine the type of the first base station cluster based on the first loss value of the first base station cluster:

Type of the first base station cluster

$$= \begin{cases} \text{Lossless cluster, first loss value} \leq N1 \\ \text{Experience} - \text{first cluster, } N1 < \text{first loss value} \leq N2 \\ \text{Cluster in which energy saving and experience are balanced, } N2 < \text{first loss value} \leq N3 \\ \text{Eenergy saving} - \text{first cluster, } N3 < \text{first loss value} \leq N4 \end{cases}$$

It can be learned from the foregoing formula that, a loss range corresponding to the lossless cluster is [0, N1], and when the first loss value of the first base station cluster is less than or equal to N1, the type of the first base station cluster is the lossless cluster. A loss range corresponding to the experience-first cluster is [N1, N2], and when the first loss value of the first base station cluster is less than N2 and greater than N1, the type of the first base station cluster is the experience-first cluster. A loss range corresponding to the cluster in which energy saving and experience are balanced is [N2, N3], and when the first loss value of the first base station cluster is less than N3 and greater than N2, the type of the first base station cluster is the cluster in which energy saving and experience are balanced. A loss range corresponding to the energy saving-first cluster is [N3, N4], and when the first loss value of the first base station cluster is less than N4 and greater than N3, the type of the first base station cluster is the energy saving-first cluster.

It should be noted that, after determining the plurality of base station clusters, the computing server determines a type of each base station cluster based on a loss value of each base station cluster. The computing server determines a type of another base station cluster in a manner similar to the foregoing manner of determining the type of the first base station cluster. Details are not described herein again. In addition, it should be noted that the foregoing formula for determining the first loss value and the foregoing formula for determining the type of the first base station cluster are merely examples, and the loss value of each base station cluster may be calculated in another manner and/or the type of each base station cluster may be defined in another manner. This is not limited in this application.

Optionally, the computing server may further obtain first information, where the first information includes different loss ranges corresponding to types of different base station clusters. The computing server may further determine the type of the first base station cluster based on the first loss value and the first information.

The first information may be used for assisting the computing server in defining the loss ranges corresponding to the types of different base station clusters.

Step S214: The computing server determines a first energy saving policy for the first base station cluster based on the type of the first base station cluster.

Specifically, a process in which the computing server determines the first energy saving policy for the first base station cluster based on the type of the first base station cluster may be divided into the following three steps:

1. The computing server may determine a second energy saving policy based on the determined type of the first base station cluster, where the second energy saving policy corresponds to the first loss range. The computing server determines a second loss value according to the second energy saving policy. The computing server determines whether the second loss value is less than an upper limit of the first loss range.
2. If the second loss value is less than the upper limit of the first loss range, the computing server determines the second energy saving policy as the first energy saving policy for the first base station cluster. If the second loss value is not less than the upper limit of the first loss range, the computing server determines a third energy saving policy, where the third energy saving policy corresponds to a second loss range, and the second loss range is smaller than the first loss range. The computing server determines a third loss value according to the third energy saving policy. The computing server determines whether the third loss value is less than the upper limit of the first loss range.
3. If the third loss value is less than the upper limit of the first loss range, the computing server determines the third energy saving policy as the first energy saving policy for the first base station cluster.

If a loss value of an energy saving policy does not meet a condition of being less than the first loss range, the foregoing three-step process may be iterated until a loss value of a current energy saving policy is less than the upper limit of the first loss range, and the current energy saving policy may be determined as the first energy saving policy

For example, there are three types of energy saving policies for a base station cluster. A first energy saving policy is reducing power of a base station that can be turned off in the first base station cluster, a second energy saving policy is turning off the base station that can be turned off in the first base station cluster, and a third energy saving policy is turning off the base station that can be turned off in the first base station cluster and reducing power of a remaining base station in the first base station cluster. Loss values generated by using the three types of energy saving policies are respectively denoted as A1, A2, and A3.

The first base station cluster is used as an example, the base station that can be turned off in the first base station cluster is at least one second base station in the at least one first base station, and a quantity of the at least one second base station is P.

The computing server may determine A1, A2, and A3 by using the following method:

The OMC collects the rates of each base station in the first region in one day (24 hours), where the rate is defined as $SiteRate_{i,t}$ and represents the rate of the base station i in the first region at the time t, and the OMC reports the collected data to the computing server. The OMC further collects quantities of users of each base station in the first region in one day (24 hours), where the quantity of users is defined as $SiteUser_{i,t}$ and represents a quantity of users of the base station i in the first region at the time t, and the OMC reports the collected data to the computing server. Therefore, the computing server may determine an average quantity of users at each time point (ClusterUsert) and an average rate at each time point (ClusterRatet) of the first base station cluster as follows:

$$ClusterUser_t = \frac{\sum_i^N SiteUser_{i,t}}{N}$$

$$ClusterRate_t = \frac{\sum_i^N SiteRate_{i,t}}{N}$$

N is the quantity of base stations in the first base station cluster.

Based on an average quantity of users and an average rate of the first base station cluster in one day (24 hours), a functional relationship between the average quantity of users and the average rate of the first base station cluster may be fitted as ClusterRate = f(ClusterUser).

The loss value A1 generated by using the first energy saving policy may be determined in the following manner: First, an average quantity of users ($ClusterUser_{A1}$) of the first base station cluster after power reduction is performed on P base stations that can be turned off in the first base station cluster is calculated. In this embodiment of this application, it is assumed that "power reduction" means first reducing power of a base station to half of original power, but this application is not limited thereto. The "power reduction" may mean reducing the power of the base station to power of any proportion of the original power:

$$ClusterUser_{A1} = \frac{\sum_t^T \sum_i^N SiteUser_{i,t}}{(N - P) * T + P * 0.5 * T}$$

In this way, an average rate: $ClusterRate_{A1}$ = f($ClusterUser_{A1}$) of the first base station cluster after the power reduction is performed on the P base stations that can be turned off in the first base station cluster may be learned of. Therefore, impact A1 of performing power reduction on the P base stations that can be turned off in the first base station cluster on the average rate of the first base station cluster is as follows:

$$A1 = \frac{ClusterRate - ClusterRate_{A1}}{ClusterRate}$$

The loss value A2 generated by using the second energy saving policy may be determined in the following manner:

First, an average quantity of users ($ClusterUser_{A2}$) of the first base station cluster after the P base stations that can be turned off in the first base station cluster are turned off is calculated as follows:

$$ClusterUser_{A2} = \frac{\sum_t^T \sum_i^N SiteUser_{i,t}}{(N - P) * T}$$

In this way, an average rate: $ClusterRate_{A2}$ = f($ClusterUser_{A2}$) of the first base station cluster after the P base stations that can be turned off in the first base station cluster are turned off may be learned of. Therefore, impact A2 of turning off the P base stations that can be turned off in the first base station cluster on the average rate of the first base station cluster is as follows:

$$A1 = \frac{\text{ClusterRate} - \text{ClusterRate}_{A2}}{\text{ClusterRate}}$$

The loss value A3 generated by using the third energy saving policy may be determined in the following manner: First, an average quantity of users (ClusterUser$_{A3}$) of the first base station cluster after the P base stations that can be turned off in the first base station cluster are turned off and power reduction is performed on a remaining base station in the first base station cluster is calculated. In this embodiment of this application, it is assumed that "power reduction" means first reducing power of a base station to half of original power, but this application is not limited thereto. The "power reduction" may mean reducing the power of the base station to power of any proportion of the original power:

$$\text{ClusterUser}_{A3} = \frac{\sum_t^T \sum_i^N SiteUser_{i,t}}{(N-P) * 0.5 * T}$$

In this way, an average rate: ClusterRate$_{A3}$ = f(ClusterUser$_{A3}$) of the first base station cluster after the P base stations that can be turned off in the first base station cluster are turned off and the power reduction is performed on the remaining base station in the first base station cluster may be learned of. Therefore, impact A3 of turning off the P base stations that can be turned off in the first base station cluster and performing power reduction on the remaining base station in the first base station cluster on the average rate of the first base station cluster is as follows:

$$A3 = \frac{\text{ClusterRate} - \text{ClusterRate}_{A3}}{\text{ClusterRate}}$$

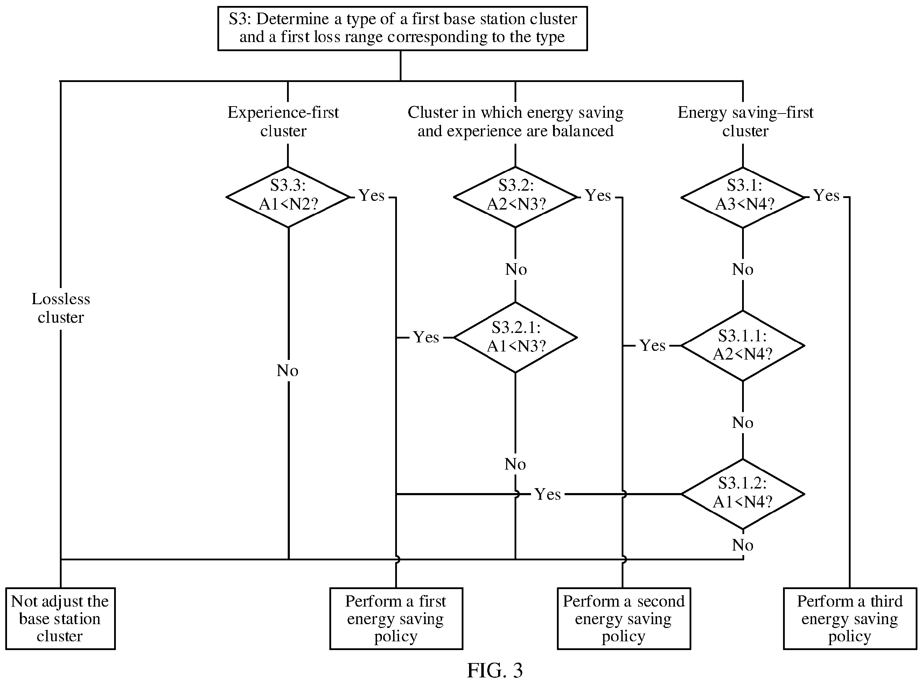

When determining the first energy saving policy for the first base station cluster, the computing server may execute a flowchart shown in FIG. 3. Details are as follows:
S3: In conclusion, the computing server may determine the type of the first base station cluster and the first loss range corresponding to the type of the first base station cluster.
If the computing server determines that the type of the first base station cluster is the lossless cluster, the computing server determines not to adjust the first base station cluster.
If the computing server determines that the type of the first base station cluster is the experience-first cluster, and the loss range corresponding to the experience-first cluster is [N1, N2], S3.3 is performed as follows: The computing server determines whether A1 is less than N2. If the computing server determines that A1 is less than N2, the computing server determines that the first energy saving policy for the first base station cluster is the first energy saving policy. If the computing server determines that A1 is not less than (greater than or equal to) N2, the computing server determines not to adjust the first base station cluster.
If the computing server determines that the type of the first base station cluster is the cluster in which energy saving and experience are balanced, and the loss range corresponding to the cluster in which energy saving and experience are balanced is [N2, N3], S3.2 is performed as follows: The computing server determines whether A2 is less than N3. If the computing server determines that A2 is less than N3, the computing server determines that the first energy saving policy for the first base station cluster is the second energy saving policy. If the computing server determines that A2 is not less than (greater than or equal to) N3, the computing server performs S3.2.1: The computing server determines whether A1 is less than N3. If the computing server determines that A1 is less than N3, the computing server determines that the first energy saving policy for the first base station cluster is the first energy saving policy. If the computing server determines that A1 is not less than (greater than or equal to) N3, the computing server determines not to adjust the first base station cluster.
If the computing server determines that the type of the first base station cluster is the energy saving-first cluster, and the loss range corresponding to the energy saving-first cluster is [N3, N4], S3.1 is performed as follows: The computing server determines whether A3 is less than N4. If the computing server determines that A3 is less than N4, the computing server determines that the first energy saving policy for the first base station cluster is the third energy saving policy. If the computing server determines that A3 is not less than (greater than or equal to) N4, the computing server performs S3.1.1: The computing server determines whether A2 is less than N4. If the computing server determines that A2 is less than N4, the computing server determines that the first energy saving policy for the first base station cluster is the second energy saving policy. If the computing server determines that A2 is not less than (greater than or equal to) N4, the computing server performs S3.1.2: The computing server determines whether A1 is less than N4. If the computing server determines that A1 is less than N4, the computing server determines that the first energy saving policy for the first base station cluster is the first energy saving policy. If the computing server determines that A1 is not less than (greater than or equal to) N4, the computing server determines not to adjust the first base station cluster.

Specifically, the first energy saving policy indicates a turn-off parameter and/or a power parameter of a corresponding base station in the first base station cluster. For example, when the first energy saving policy is the first energy saving policy, the first energy saving policy indicates a power parameter for performing power reduction on the P base stations that can be turned off in the first base station cluster. When the first energy saving policy is the second energy saving policy, the first energy saving policy indicates a turn-off parameter for turning off the P base stations that can be turned off in the first base station cluster. When the first energy saving policy is the third energy saving policy, the first energy saving policy indicates a turn-off parameter for turning off the P base stations that can be turned off in the first base station cluster and a power parameter for performing power reduction on the remaining base station in the first base station cluster.

Specifically, the power parameter may specifically indicate a reduced power value, a difference between an original power value and the reduced power value, and/or the like. This is not limited in this application. The turn-off parameter may specifically indicate turn-off start time, turn-off end time, or the like.

According to the method shown in the flowchart in FIG. 3, the computing server may determine the first energy saving policy for the first base station cluster. The computing server may indicate, to the OMC, the determined first energy saving policy for the first base station cluster, and the OMC triggers a corresponding base station to perform a corresponding policy.

Optionally, the computing server may further obtain second information, where the second information includes power parameters, turn-off parameters, and/or the like corresponding to different base station clusters. The computing server may further determine the power parameter and/or the turn-off parameter of the first base station cluster based on the second information.

The second information may be used for assisting the computing server in determining the power parameter and/or the turn-off parameter of the first energy saving policy for the first base station cluster.

According to the technical solutions in embodiments of this application, differentiated energy saving policies may be provided for different base station clusters based on an actual user requirement, to improve energy saving gains.

Finally, apparatus embodiments in embodiments of this application are described.

To implement functions in the method provided in this application, each of the computing server, the OMC, the base station, and the like may include a hardware structure and/or a software module, and the functions are implemented by the hardware structure, the software module, or a combination of the hardware structure and the software module. Whether a function in the foregoing functions is performed by the hardware structure, the software module, or a combination of the hardware structure and the software module depends on a particular application and a design constraint condition of the technical solutions.

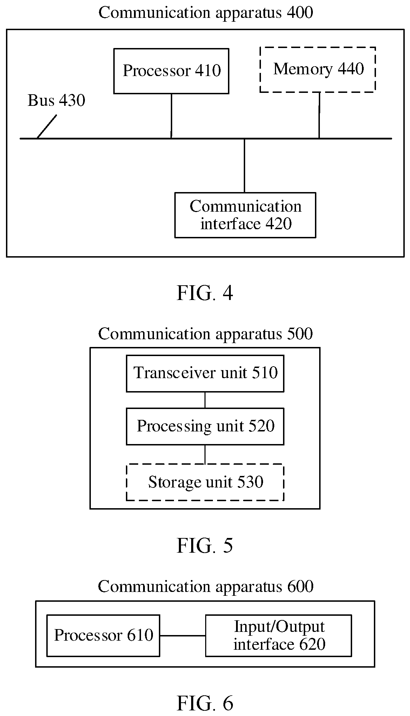

FIG. 4 is a block diagram of a communication apparatus 400 according to an embodiment of this application. The communication apparatus 400 includes a processor 410 and a communication interface 420. Optionally, the processor 410 and the communication interface 420 may be connected to each other through a bus 430. The communication apparatus 400 may be a computing server or an OMC.

Optionally, the communication apparatus 400 may further include a memory 440. The memory 440 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory 440 is configured to store related instructions and data.

The processor 410 may be one or more central processing units (central processing units, CPUs). When the processor 410 is one CPU, the CPU may be a single-core CPU or a multicore CPU.

When the communication apparatus 400 is the computing server, in an example, the communication apparatus 400 is configured to perform the following operations: determining a plurality of base station clusters in a first region, and the like.

When the communication apparatus 400 is the OMC, in an example, the communication apparatus 400 is configured to perform the following operations: collecting rates of each base station in the first region in one day (24 hours), collecting quantities of users of each base station in the first region in one day (24 hours), and the like.

The foregoing content is merely used as an example for description. When the communication apparatus 400 is the computing server/OMC, the communication apparatus 400 is responsible for performing the methods or steps related to the computing server/OMC in the foregoing method embodiments.

The foregoing descriptions are merely examples. For specific content, refer to the content shown in the foregoing method embodiments. For implementation of the operations in FIG. 4, refer to corresponding descriptions in the method embodiments shown in FIG. 2 and FIG. 3.

FIG. 5 is a block diagram of a communication apparatus 500 according to an embodiment of this application. The communication apparatus 500 may be a computing server or an OMC, or may be a chip or a module in the computing server or the OMC, and is configured to implement the method in the foregoing embodiments. The communication apparatus 500 includes a transceiver unit 510. The following describes the transceiver unit 510 and a processing unit 520 as examples.

The transceiver unit 510 may include a sending unit and a receiving unit. The sending unit is configured to perform a sending action of the communication apparatus 500, and the receiving unit is configured to perform a receiving action of the communication apparatus 500. For ease of description, in embodiments of this application, the sending unit and the receiving unit are combined into a transceiver unit. Unified description is provided herein, and details are not described below again.

When the communication apparatus 500 is the computing server, in an example, the transceiver unit 510 is configured to obtain first information, or the transceiver unit 510 is configured to obtain second information, and the processing unit 520 is configured to determine a plurality of base station clusters in a first region.

When the communication apparatus 500 is the OMC, in an example, the transceiver unit 510 is configured to: collect rates of each base station in the first region in one day (24 hours), collect quantities of users of each base station in the first region in one day (24 hours), and the like.

The foregoing content is merely used as an example for description. When the communication apparatus 500 is a computing server or the OMC, the communication apparatus 500 is responsible for performing methods or steps related to the computing server or the OMC in the foregoing method embodiments.

Optionally, the communication apparatus 500 further includes a storage unit 530, and the storage unit 530 is configured to store a program or code used to perform the foregoing method.

The apparatus embodiments shown in FIG. 4 and FIG. 5 are used to implement the content described in FIG. 2 and FIG. 3. For specific execution steps and methods of the apparatuses shown in FIG. 4 and FIG. 5, refer to the content described in the foregoing method embodiments.

FIG. 6 is a block diagram of a communication apparatus 600 according to an embodiment of this application. The communication apparatus 600 is configured to implement a function of a computing server/OMC. The communication apparatus 600 may be a chip in the computing server/OMC.

The communication apparatus 600 includes an input/output interface 620 and a processor 610. The input/output interface 620 may be an input/output circuit. The processor 610 may be a signal processor, a chip, or another integrated circuit that may implement the method in this application. The input/output interface 620 is configured to input or output a signal or data.

For example, when the communication apparatus 600 is the computing server, the input/output interface 620 is configured to obtain first information, or the input/output interface 620 is configured to obtain second information. The processor 610 is configured to determine a plurality of base station clusters in a first region.

For example, when the communication apparatus 600 is an OMC, the input/output interface 620 is configured to: collect rates of each base station in the first region in one day (24 hours), collect quantities of users of each base station in the first region in one day (24 hours), and the like.

In a possible implementation, the processor 610 executes instructions stored in a memory, to implement the function implemented by the computing server/OMC.

Optionally, the communication apparatus 600 further includes the memory.

Optionally, the processor is integrated with the memory.

Optionally, the memory is outside the communication apparatus 600.

In a possible implementation, the processor 610 may be a logic circuit, and the processor 610 inputs/outputs a message or signaling through the input/output interface 620. The logic circuit may be a signal processor, a chip, or another integrated circuit that may implement the method in embodiments of this application.

The foregoing descriptions of the communication apparatus 600 are merely an example for description. The communication apparatus 600 can be configured to perform the method according to the foregoing embodiments. For specific content, refer to the descriptions in the foregoing method embodiments. Details are not described herein again.

This application further provides a chip, including a processor, configured to invoke, from a memory, instructions stored in the memory and run the instructions stored in the memory, to enable a communication device in which the chip is installed to perform the method in the foregoing examples.

This application further provides a chip, including an input interface, an output interface, and a processor. The input interface, the output interface, and the processor are connected to each other through an internal connection path. The processor is configured to execute code in a memory, and when the code is executed, the processor is configured to perform the method in the foregoing examples. Optionally, the chip further includes the memory, and the memory is configured to store a computer program or code.

This application further provides a processor, configured to be coupled to a memory, and configured to perform a method and a function related to the network device or the terminal device in any one of the foregoing embodiments.

This application provides a computer program product including instructions. When the computer program product runs on a computer, the method in the foregoing embodiments is implemented.

This application further provides a computer program. When the computer program is run on a computer, the method in the foregoing embodiments is implemented.

This application further provides a computer-readable storage medium, where the computer-readable storage medium stores a computer program. When the computer program is executed by a computer, the method in the foregoing embodiments is implemented.

A person of ordinary skill in the art may be aware that, the units and algorithm steps described with reference to the examples in embodiments disclosed in this specification can be implemented by electronic hardware or a combination of computer software and electronic hardware. Whether the functions are performed by hardware or software depends on a particular application and a design constraint condition of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a detailed working process of the foregoing system, apparatus, and unit, refer to a corresponding process in the foregoing method embodiments. Details are not described herein again.

In several embodiments provided in this application, the disclosed system, apparatuses and method may be implemented in another manner. For example, the foregoing described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

Units described as separate parts may or may not be physically separate, and parts displayed as units may or may not be physical units, that is, may be located in one position, or may be distributed on a plurality of network units. Some or all of the units may be selected based on an actual need to achieve the objectives of the technical solutions of embodiments of this application.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device, or the like) to perform all or some of the steps of the method embodiments in this application. The foregoing storage medium includes any medium that can store program code, such as a USB flash drive, a mobile hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, wherein the method comprises:

   determining, by a computing server, a plurality of base station clusters in a first region, wherein the plurality of base station clusters comprise a first base station cluster;
   determining, by the computing server, a type of the first base station cluster based on a relationship between a first indicator of the first base station cluster and the first indicator of the plurality of base station clusters; and
   determining, by the computing server, a first energy saving policy for the first base station cluster based on the type of the first base station cluster.

2. The method according to claim 1, wherein the first indicator comprises any one of the following: an average rate, a low-rate proportion, or a coverage rate.

3. The method according to claim 1 or 2, wherein the determining, by the computing server, the type of the first base station cluster based on the relationship between the first indicator of the first base station cluster and the first indicator of the plurality of base station clusters comprises:

   determining, by the computing server based on the relationship between the first indicator of the first base station cluster and the first indicator of the plurality of base station clusters, a first loss value corresponding to the first indicator of the first base station cluster; and

determining, by the computing server, the type of the first base station cluster based on the first loss value, wherein the type of the first base station cluster corresponds to a first loss range, and the first loss value is within the first loss range.

4. The method according to claim 3, wherein the determining, by the computing server, the type of the first base station cluster based on the first loss value comprises:

obtaining, by the computing server, first information, wherein the first information comprises different loss ranges corresponding to types of different base station clusters; and

determining, by the computing server, the type of the first base station cluster based on the first loss value and the first information.

5. The method according to claim 3 or 4, wherein the determining, by the computing server, the first energy saving policy for the first base station cluster based on the type of the first base station cluster comprises:

determining, by the computing server, a second energy saving policy based on the type of the first base station cluster, wherein the second energy saving policy corresponds to the first loss range;

determining, by the computing server, a second loss value according to the second energy saving policy;

determining, by the computing server, whether the second loss value is less than an upper limit of the first loss range; and

if the second loss value is less than the upper limit of the first loss range, determining, by the computing server, the second energy saving policy as the first energy saving policy for the first base station cluster.

6. The method according to claim 5, wherein if the second loss value is not less than the upper limit of the first loss range, the determining, by the computing server, the first energy saving policy for the first base station cluster based on the type of the first base station cluster further comprises:

determining, by the computing server, a third energy saving policy, wherein the third energy saving policy corresponds to a second loss range, and the second loss range is smaller than the first loss range;

determining, by the computing server, a third loss value according to the third energy saving policy;

determining, by the computing server, whether the third loss value is less than the upper limit of the first loss range; and

if the third loss value is less than the upper limit of the first loss range, determining, by the computing server, the third energy saving policy as the first energy saving policy for the first base station cluster.

7. The method according to any one of claims 1 to 6, wherein the method further comprises:
sending, by the computing server, the first energy saving policy to an operation and maintenance center OMC.

8. A communication apparatus, wherein the apparatus comprises:

a processing unit, configured to determine a plurality of base station clusters in a first region, wherein the plurality of base station clusters comprise a first base station cluster, wherein

the processing unit is further configured to determine a type of the first base station cluster based on a relationship between a first indicator of the first base station cluster and the first indicator of the plurality of base station clusters; and

the processing unit is further configured to determine a first energy saving policy for the first base station cluster based on the type of the first base station cluster.

9. The apparatus according to claim 8, wherein the first indicator comprises any one of the following: an average rate, a low-rate proportion, or a coverage rate.

10. The apparatus according to claim 8 or 9, wherein that the processing unit is further configured to determine the type of the first base station cluster based on the relationship between the first indicator of the first base station cluster and the first indicator of the plurality of base station clusters comprises:

the processing unit is further configured to determine, based on the relationship between the first indicator of the first base station cluster and the first indicator of the plurality of base station clusters, a first loss value corresponding to the first indicator of the first base station cluster; and

the processing unit is further configured to determine the type of the first base station cluster based on the first loss value, wherein the type of the first base station cluster corresponds to a first loss range, and the first loss value is within the first loss range.

11. The apparatus according to claim 10, wherein that the processing unit is further configured to determine the type of the first base station cluster based on the first loss value comprises:

the apparatus further comprises: a transceiver unit, configured to obtain first information, wherein the first information comprises different loss ranges corresponding to types of different base station clusters; and

the processing unit is further configured to determine the type of the first base station cluster based on the first loss value and the first information.

12. The apparatus according to claim 10 or 11, wherein that the processing unit is further configured to determine the first energy saving policy for the first base station cluster based on the type of the first base station cluster comprises:

the processing unit is further configured to determine a second energy saving policy based on the type of the first base station cluster, wherein the second energy saving policy corresponds to the first loss range;

the processing unit is further configured to determine a second loss value according to the second energy saving policy;

the processing unit is further configured to determine whether the second loss value is less than an upper limit of the first loss range; and

if the second loss value is less than the upper limit of the first loss range, the processing unit is further configured to determine the second energy saving policy as the first energy saving policy for the first base station cluster.

13. The apparatus according to claim 12, wherein if the second loss value is not less than the upper limit of the first loss range, that the processing unit is further configured to determine the first energy saving policy for the first base station cluster based on the type of the first base station cluster further comprises:

the processing unit is further configured to determine a third energy saving policy, wherein the third energy saving policy corresponds to a second loss range, and the second loss range is smaller than the first loss range;

the processing unit is further configured to determine a third loss value according to the third energy saving policy;

the processing unit is further configured to determine whether the third loss value is less than the upper limit of the first loss range; and

if the third loss value is less than the upper limit of the first loss range, the processing unit is further configured to determine the third energy saving policy as the first energy saving policy for the first base station cluster.

14. The apparatus according to any one of claims 11 to 13, wherein the transceiver unit is further configured to send the first energy saving policy to an operation and maintenance center OMC.

15. A communication system, wherein the communication system comprises a computing server and an operation and maintenance center OMC, and the computing server is configured to perform the method according to any one of claims 1 to 7.

16. A communication apparatus, comprising a processor, wherein the processor is configured to execute a computer program or instructions, to enable the communication apparatus to perform the method according to any one of claims 1 to 7.

17. The communication apparatus according to claim 9, wherein the communication apparatus further comprises a memory, and the memory is configured to store the computer program or the instructions.

18. The communication apparatus according to claim 9, wherein the communication apparatus further comprises a communication interface, and the communication interface is configured to input and/or output a signal.

19. A computer-readable storage medium, wherein the computer-readable storage medium stores a computer program or instructions, and when the computer program or the instructions are run on a computer, the method according to any one of claims 1 to 7 is performed.

**20.** A computer program product, comprising instructions, wherein when the instructions are run on a computer, the method according to any one of claims 1 to 7 is performed.

100

FIG. 1

Step S210: A computing server determines a plurality of base station clusters in a first region, where the plurality of base station clusters include a first base station cluster

Step S212: The computing server determines a type of the first base station cluster based on a relationship between a first indicator of the first base station cluster and the first indicator of the plurality of base station clusters

Step S214: The computing server determines a first energy saving policy for the first base station cluster based on the type of the first base station cluster

FIG. 2

S3: Determine a type of a first base station cluster
and a first loss range corresponding to the type

Experience-first
cluster

Cluster in which energy saving
and experience are balanced

Energy saving–first
cluster

S3.3:
A1<N2?

Yes

S3.2:
A2<N3?

Yes

S3.1:
A3<N4?

Yes

No

No

Lossless
cluster

Yes

S3.2.1:
A1<N3?

Yes

S3.1.1:
A2<N4?

No

No

No

Yes

Yes

S3.1.2:
A1<N4?

No

Not adjust the
base station
cluster

Perform a first
energy saving
policy

Perform a second
energy saving
policy

Perform a third
energy saving
policy

FIG. 3

Communication apparatus 400

Processor 410

Memory 440

Bus 430

Communication
interface 420

FIG. 4

Communication apparatus 500

Transceiver unit 510

Processing unit 520

Storage unit 530

FIG. 5

Communication apparatus 600

Processor 610

Input/Output
interface 620

FIG. 6

## INTERNATIONAL SEARCH REPORT

| International application No. |
|---|
| **PCT/CN2024/119113** |

### A. CLASSIFICATION OF SUBJECT MATTER

H04W 52/02(2009.01)i

According to International Patent Classification (IPC) or to both national classification and IPC

### B. FIELDS SEARCHED

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT, CNKI, ENTXT, ENTXTC, VEN, 3GPP: 基站, 簇, 组, 群, 集, 节能, 省电, 类型, 类别, 种类, BS, Base Station, cluster, group, set, energy saving, power saving, type, class, kind, category

### C. DOCUMENTS CONSIDERED TO BE RELEVANT

| Category* | Citation of document, with indication, where appropriate, of the relevant passages | Relevant to claim No. |
|---|---|---|
| Y | CN 105025497 A (CHINA MOBILE GROUP BEIJING CO., LTD.) 04 November 2015 (2015-11-04)<br>description, paragraphs 0002-0085 | 1-20 |
| Y | CN 102075958 A (ZTE CORP.) 25 May 2011 (2011-05-25)<br>description, paragraphs 0003-0004 | 1-20 |
| A | US 2015189589 A1 (HUAWEI TECHNOLOGIES CO., LTD.) 02 July 2015 (2015-07-02)<br>entire document | 1-20 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 December 2024** | **23 December 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/119113**

| Patent document cited in search report | | | Publication date (day/month/year) | Patent family member(s) | | | Publication date (day/month/year) |
|---|---|---|---|---|---|---|---|
| CN | 105025497 | A | 04 November 2015 | None | | | |
| CN | 102075958 | A | 25 May 2011 | None | | | |
| US | 2015189589 | A1 | 02 July 2015 | WO | 2014040642 | A1 | 20 March 2014 |
| | | | | CN | 104641695 | A | 20 May 2015 |

Form PCT/ISA/210 (patent family annex) (July 2022)

**EP 4 783 680 A1**

**Patent documents cited in the description**

- CN 202311333696